# EUROPEAN PATENT APPLICATION

(11) **EP 2 226 348 A1**
(43) Date of publication of application: **08.09.2010**
(21) Application number: 10154677.8
(22) Date of filing: 25.02.2010
(51) Int. Cl.: C08G 59/50, C08L 63/00

(54) **Epoxide-based composition**

(30) Priority: 04.03.2009 US 397557
(71) Applicant: AIR PRODUCTS AND CHEMICALS, INC., Allentown, PA 18195-1501 (US)
(72) Inventor: Chiba, Yasuo, Fujimi City Saitama (JP); Abdourazak, Atteye Houssein, Allentown, PA 18104 (US); Morimoto, Hiroya, Bunkyo-Ward Tokyo MC 839 (JP)
(74) Representative: Westendorp | Sommer

(57) **Abstract**

An epoxide-based composition comprising a combination of an epoxide and a curing agent, wherein the epoxide is selected from a phenyl glycidyl ether-based polyepoxide and the curing agent is a salt compound composed of a N-alkanol piperidine and a carboxylic acid.

## Description

### TECHNICAL FIELD

The present invention relates to a curable epoxide-based composition. More specially, the present invention relates to a curable epoxide-based composition which is a liquid and has a longer pot life.

### BACKGROUND OF THE INVENTION

As for an epoxy composition at a stage before curing prepared by combining an epoxide and a curing agent, it is preferred that the viscosity not change fundamentally for an extended period of time after mixing an epoxide and a curing agent. This is because, such a combination can facilitate the next step according to the intended use, such as coating, lamination, injection, potting or impregnation of the composition. The composition having this property is one of ideal embodiments such that they can smoothly achieve the subsequent "curing" stage.

When a mixture of an epoxide component and a polyamine-based curing agent in general is left standing as it is for a long period of time, there occurs a phenomenon that a reaction takes place between those materials and the viscosity of the composition itself increases to cause solidification. Thus, the composition has a temporal limit in the application to practical usage, such as coating, lamination, injection, potting or impregnation. The time during which a certain level of viscosity not getting to a limiting viscosity is maintained so as to keep the conditions capable of performing the desired working procedure, is referred to as "pot life", or working life. A longer pot life is a desirable property in that an operation for a long period of time can be safely ensured.

In this regard, a mixed composition comprising a solid epoxide component and similarly a solid curing agent component are known to have a long pot life (or shelf life). This is because the initiation of curing is depending on the thermal fusion of two components. Further, a large number of semi liquid-type compositions obtained by dispersing a solid curing agent component in a liquid epoxide component are known and also in this case, since the curing agent component is a solid, the initiation of curing is depend on thermal fusion of the curing agent component or mixing of two components due to mutual dissolution.

However, this type of mixture composition has a drawback ascribable to the fact that at least one component is a solid. More specifically, in the case of a composite material, for example, a fiber reinforced plastic comprising resin binders and fibers, the resin binder needs to penetrate into a fiber bundle, but when a solid component is used, a filtration phenomenon by the fiber occurs causing separation between binder components and, as a result, a curing failure may be brought about. Once such a failure occurs, how long the curing time is kept or what large quantity of heat is given, the purpose intended in view of design cannot be achieved. The same applies to the case of using a woven fabric or the like for the reinforcing material. For this reason, the presence of a complete liquid-type composition comprising a liquid epoxide component and a liquid curing agent component is very significant as a material capable of overcoming such a problem.

Incidentally, the pot life of a normal composition comprising an epoxide and a polyamine curing agent component having many performances is short and specifically limited to several hours. Generally, in a composition having a short pot life, a reaction abruptly occurs and the time to reach the cured state is short, whereas in a composition having a long pot life, the time necessary for curing is long. In this respect, a liquid epoxide-based composition having as long a pot life as several tens of hours, being curable at relatively low temperature range (moderate temperature range) of 100°C or less, and giving a cured product having a glass transition temperature reaching 60°C or more, is scarcely available on the market and development of such a composition is being demanded.

The presence of such a composition comprising an epoxide and curing agent both being a liquid enables paint coating for the purpose of protecting the inner surface of a water supply pipe, a sewer pipe or other industrial liquid transport pipes, or outdoor construction for the purpose of, for example, laminating a protective lining or the like serving also as pipe reinforcement, by using an organic or in organic fiber or film or the like. In particular, the composition is effective for rehabilitation work or the like of the inner surface of a pipe, which is performed without digging up fluid transport pipes already buried under the ground.

The rehabilitation work of these buried pipes is usually performed by setting the section between a manhole and a manhole as one unit of work. The working procedure comprises, in sequence, mechanical removal of old coating remaining inside of the pipe, washing with water, drying, coating of a resin component, spreading of inverted fibers or films by using hot air or hot water, and maintenance of a given temperature with hot water or hot air. In applying a rehabilitation work using a fiber or a film, in the case of a short work selection, coating of an adhesive to the inside of the pipe and lamination by spreading of inverted cylindrical fiber or films may be performed without any serious trouble even if the pot life of the composition is short, but in the case of a long work selection, a long time over several tens of hours is necessary and the adhesive is required to keep a stable condition throughout the entire time in the process of coating the adhesive and spreading fibers or films and be sufficiently cured in the subsequent moderate temperature range to an extent of having a necessary performance. Realization of this property involves difficulties.

For rehabilitation of pipes used for transporting water or other fluid media there is not a suitable binder for the composite system which is applied to the inside steel or concrete wall of such pipes. Incumbent technologies cannot provide appropriate working time (pot life), cause odor or toxicity issues from employed chemicals (e.g., mercaptan, acrylonitrile) in binders or cannot be applied to multi layer and non-transparent films/composites due to the curing process (e.g. UV cure).

### BRIEF SUMMARY OF THE INVENTION

The epoxide-based composition according to the present invention comprises an epoxide component (component A) and a curing agent component (component B):
(A) an epoxide component comprising a phenyl glycidyl ether polyepoxide; and
(B) a curing agent component comprising at least one salt compound formed from an N-alkanol piperidine and a carboxylic acid.

The epoxide-based composition according to the present invention may also comprise at least one mono-functional or multi-functional epoxide having an oxirane ring in the molecule thereof as a component to be combined with the phenyl glycidyl ether polyepoxide.

The curable epoxide-based composition according to the present invention has an advantage that, even after the mixing of the epoxy component and the curing agent component, it can maintain the uncured state of the mixture over a long period of time, to thereby enable the composition to maintain the viscosity in a stable condition for a long time until the use of the composition in the next step (or operation). Further, at the curing thereof, the curable epoxide-based composition according to the present invention can exhibit sufficient performance, even under heating in a moderate (or medium) temperature range.

The present epoxide-based composition ensures that an uncured condition after mixing an epoxide component and a curing agent component can be maintained for a long period time, a subsequent process such as coating, sandwiching, impregnation and injection can be performed at leisure, and furthermore, later curing can be performed even at a relatively low temperature of 100°C or less, is very significant and useful for rehabilitation and repair work of buried pipes.

The present invention provides an epoxide-based composition which ensures that flowable (non-gelled) condition is maintained for a long period (e.g., a period up to 24 hours) after the mixing of an epoxide compound and a curing component, and that the change of viscosity within 16 hours does not exceeds 2 times that at the time of the mixing, and may facilitate the subsequent application and spreading of the composition. The present invention also provides an epoxide-based composition such that it can be cured by using a heat medium such as hot water or hot air in the moderate temperature range, after the composition maintain the "preferable" flowable condition.

The binder system from the present invention provides up to 24 hours pot life at ambient temperature while maintaining a fluid condition, cures under 100°C, achieves a 70°C Tg as finished system and provides good adhesion as a composite binder to the concrete and steel substrates.

### DETAILED DESCRIPTION OF THE INVENTION

The epoxide-based composition according to the present invention can ensure that a flowable condition is maintained for long period (e.g. a period up to 24 hours) after the mixing of an epoxide compound and a curing agent component, and that the change of viscosity within 16 hours does not exceed 2 times that at the time of the mixing, and facilitate the subsequent application and spreading of the composition.

Further, the epoxide-based composition can be cured by using a heat medium such as hot water or hot air in a moderate temperature range, after the composition maintains the "preferable" fluid condition.

Therefore, the epoxide-based composition according to the present invention enables its application to various electric components where the performance is disrupted by curing in a high temperature region, or application to rehabilitation work of buried pipes as a conduit for various fluids.

Further, the epoxide-based composition according to the present invention is effective for rehabilitation work performed without digging up buried pipes and also use in making an electronic component or the like where the high temperature performance of the product is disrupted by curing in a high temperature.

Herein below, the present invention will be described in detail. In the following description, "%" and "part(s)" representing a quantitative proportion or ratio are those based on mass, unless otherwise noted specifically.

The epoxide based composition according to the present invention comprises an epoxide component (component A) and a curing agent component (component B) in which the epoxide component comprises a phenyl glycidyl ether-based polyepoxide; and the curing agent component comprises at least one salt compound formed from an N-alkanol piperidine and a carboxylic acid.

The epoxide-based composition according to the present invention may have the following Properties (1)-(3).

### Property 1

Under conditions used in the Examples, the change of viscosity of the epoxide-based composition according to the present invention within 16 hours is 2.2 times or less (preferably 1.9 times or less, particularly 1.4 times or less) that at the time of the mixing of the components A and B.

### Property 2

Under the conditions used in Examples, the Tg (glass transition temperature) of the epoxide-based composition according to the present invention, after the curing thereof at 60°C for 24 hours may be at least 60°C, more preferably at least 70°C. The Tg (glass transition temperature) of the epoxide-based composition after the curing thereof at 80°C for 16 hours may be 70°C, more preferably 80°C.

### Property 3

Under the conditions used in Examples, the shear bond strength of the epoxide-based composition according to the present invention after the curing thereof at 60°C for 24 hours may be 10N/mm² or more, preferably 13 N/mm² or more.

The epoxide (component (A) of the composition of the present invention is a phenyl glycidyl ether epoxide having a plurality of oxirane structures in the molecule and having reactivity with an amine, and examples thereof may comprise the following:

Aromatic diglycidyl ethers generated by reacting diphenols such as bisphenol A, bisphenol F, bisphenol AD, tetramethylbisphenol A, tetramethyl bisphenol F or biphenyl, with epichlorohydrin; glycidyl ether obtained by reacting a novolak such as phenol novolak, cresol novolak, ethylphenol novolak, propylphenol novolak, butylphenol novolak, pentylphenol novolak, octylphenol novolak or nonylphenol novolak, with epichlorohydrin; and glycidyl ethers obtained by reacting a polyhydric phenol such as catechol, resorcin, trihydroxybiphenyl, dihydroxybenzophenone, bisresorcinol, hydroquinone, tris (hydroxyphenyl) methane, tetrakis(hydroxyphenyl) ethane or bisphenol, with epichlorohydrin.

Among the epoxy compounds above, the epoxies preferably used in the present invention are diglycidyl ethers of bisphenol A and bisphenol F.

Examples of the epoxides which can be used in combination with the phenyl glycidyl ether epoxides, if desired, may comprise:

(1) polyglycidyl ethers generated by reacting an aliphatic polyhydric alcohol such as glycol, neopentylalcohol, ethyleneglycol, propyleneglycol, tetramethyleneglycol, hexaneglycol, polyethyleneglycol or polypropylene glycol, with epichlorohydrin;

(2) glycidyl ether esters generated by reacting a hydroxycarboxylic acid such as p-oxybenzoic acid or β-oxynaphthoic acid, with epichlorohydrin;

(3) polyglycidyl ester generated by reacting a polycarboxylic acid such as phthalic acid, methylphthalic acid, isophtalic acid, terephthalic acid, tetrahydroxyphthalic acid, hexahydoxyphthalic acid, endomethylenetetrahydrophthalic acid, endomethylenehexahydroxydrophthalic acid, trimellitic acid, a dimer acid or a polymerized fatty acid, with epichlorohydrin;

(4) diglycidylamino esters generated by reacting an aminobenzoic acid with epichlorohydrin; and

(5) polyglycidylamines generated by reacting aniline, toluidine, m-xylyenediamine, 1,2- diaminocyclohexane, 4,4-diaminodiphenyl ether, 4,4-diaminodiphenylmethane, 4,4-diaminodiphenylsulfone, hydantoin, an alkylhydantoin or cyanuric acid, with epichlorohydrin.

Also, a monoepoxide having one oxirane ring in the molecular, which is not the essential epoxide component maybe used in combination, if desired. Examples of this monoepoxide may comprise butylglycidyl ether, a glycidyl ether of a C8-C18 aliphatic alcohol, a phenylglycidyl ether, an alkylphenylglycidyl ether and benzoic acid glycidyl ester.

The curing agent component (component B) constituting the epoxide-based composition of present invention is a tertiary amine salt and may be a salt formation product of an N- alkanol piperidine (component B1) and carboxylic acid (component B2).

### Component B1

The N- alkanol piperidine (component B1) may be prepared by direct bonding of a C2-C4 alkanol group to the nitrogen atom of a piperidine molecule. This component can be generated by addition-reacting a C2-C4 alkylene oxide, especially an ethylene oxide or a propylene oxide, to a piperidine as is well known in the synthesis art.

The preferred tertiary amine comprises N- ethanol piperidine and N- propanol piperidine.

### Component B2

The carboxylic acid (component B2) of the tertiary amine salt as curing agent component of the present invention may be a monovalent or polyvalent organic carboxylic acid, and examples thereof may comprise the following:

Acetic acid, propionic acid, a butyric acid, a pentatonic acid, a hexanoic acid, a heptanoic acid, a palmitic acid, a stearic acid, an oleic acid, a linoleic acid, acid, a synthetic fatty acid, a crude raw material of the fatty acid, such as coconut fatty acid, palm oil fatty acid, safflower oil fatty acid, tall oil fatty acid, rice bran oil fatty acid, soybean oil fatty acid, beef tallow fatty acid, and a polymerized fatty acid (dimer acid) derived therefrom; and

A dibasic acid such as adipic acid, azelaic acid, sebacic acid, dodecane diacid, linolenic acid or linoleic acid or polybasic acid synthesized from a Diels-Alder reaction product thereof or polymerized with an acrylic acid, or from a copolymer of butadiene and styrene.

Component B as a constituent component of the epoxide-based composition of the present invention may be prescribed to satisfactory the relationship that the carboxylic acid equivalent of the component B2 is from 0.2 to 1.1 equivalents per mole of an N-alkanol piperidine as the component B1. In the case of a curing agent prescribed outside of this relationship, a long pot life and a subsequent smooth curing at 100°C or less, which is the aim of the present invention, cannot be expected.

As for the ratio between the epoxide component (A) and the curing agent component (B), the amount of the curing agent component (B) is from 1 to 50 wt parts, or 5 to 20 wt parts, per 100 wt parts of the polyepoxide component (A). If the amount of the component B is less than the range above, a very long pot life after mixing of component (A) and component (B) may be expected, but the subsequent curing may take a long time, which is impracticable. On the contrary, if the curing agent component (B) is combined in excess of the range above, curing after mixing the component (A) and the component (B) may swiftly proceed, but the pot life necessary for operation may become short, which is impracticable.

A solvent for adjusting the viscosity may be added to the composition of the present invention. Example of the solvent may comprise an aliphatic solvent such as heptane, hexane and cyclohexane; an aromatic solvent such as toluene, xylene, ethylbenzene and alkylbenzenes; an alcohol such as methanol, ethanol, n-propanol, iso-propernol, n-butanol, iso-butanol, s-butanol, ethylene glycol, a mono or di-alkylether of ethylene glycol, propylene glycol, a mono-or di-alkylether of propylene glycol, benzyl alcohol and cyclohexyl alcohol; and a ketone such as methylethyl ketone and methylisobutyl ketone.

Further, in the composition of the present invention, a plasticizer, a filler, a coloring agent, an extender, pigment, organic or inorganic fibers, a silicone, titanate or aluminum coupling agent for improving adhesion to the pipe body, a thixotropic agent, and the like may be used in combination, if desired.

### EXAMPLES

### Preparation of Curing Agent A

Commercially available azelaic acid (9.4g) and 12.9g of N-ethanol piperidine (NHEP) combined in a reaction vessel and thoroughly mixed by shaking under heating at 70°C. The product was a yellow-brown liquid and had a viscosity of 3,300 milli-Pascal second (mPa.s) at 25°C.

### Preparation of Curing Agent B

Similarly, 4.7g of azelaic acid, 6.15g of 2-ethylhexanoic acid and 12.9 g of N-ethanol piperidine were added and thoroughly mixed by shaking under heating at 70°C. The product was in yellow-brown color and had a viscosity of 610 milli-Pascal second.

### Preparation of Curing Agents C to P

Similarly to Curings Agent A and B, a selected fatty acid and N-ethanol piperidine were reacted. The products all were a liquid in a range from yellow-brown to black-brown. The viscosity at 25°C varied according to the formulation, and the results obtained are shown in Table 1.

In the Examples, a composition comprising a selected epoxide which was used alone or as a mixture, and a curing agent prepared in the preparation example of the curing agent, was tested for performance.

The epoxy compounds used in Examples are as the follows:
- Epoxide A: Epikote 828, bisphenol A-type diepoxide, produced by Nippon Epoxy K.K. W.P.E: about 190
- Epoxide B: Epiclon 830, bisphenol F-type diepoxide, produced by DIC Corporation, W.P.E: about 175.
- Epoxide C: Epodil 757, butane digycol diepoxide, produced by Air Products and Chemicals, Inc. W.P.E.: about 166.
- Epoxide D: Epodil 748, alkyl monoepoxide having carbon number of 12 to 14 produced by Air Products and Chemicals, Inc., W.P.E.: about 230.

### Test of Viscosity as Pot Life

An epoxide and a curing agent of nearly 20 g in total were weighed in a paper cup and thoroughly mixed using a conditioning mixer, MX-201, manufacture by THINKY Corp. Subsequently, the viscosity at 25°C was measured using a Brookfield E-type viscometer and used as the viscosity in the initial stage of mixing. The mixture was kept at 25°C and after 16 hours, the viscosity was again measured. From the result, the rate of change between the viscosity after 16 hours and the initial viscosity was determined.

### Test of the Glass Transition Temperature (Tg) as test of Curability

The sample immediately after mixing at the test of viscosity was weighed (almost 0.02g) in an aluminum vessel for diffraction scanning calorimetry (DSC) and cured in a heated oven at 60°C for 24 hours or 80°C for 16 hours. After the completion of heating, this was thoroughly cooled and used as the sample of DSC measurement. The scanning of DSC was performed under the conditions of heating at a temperature rising speed of 10°C/min from room temperature to 120°C.

### Test of Share Bond Strength

When a sample for the test of potlife was prepared, a specimen for the shear bond strength test was prepared using the sample. For the specimen, a soft steel sheet specified in JIS G 3141 was polished with sand paper and used. Curing conditions of 60°C and 24 hours were employed. Thereafter, a destructive test was performed in a room at 25°C at a test of 10°C/min in terms of head speed by using a testing apparatus autograph manufactured by Shinazu Corp.

**Table 1 : Formulation examples of Curing Agent**

| | Acid | A | B | C | D | E | F | G | H | I | J | K | J | M | N | O | P |
|---|---|---|---|---|---|---|---|---|---|---|---|---|---|---|---|---|---|
| Azelaic acid | 94 | 94 | 47 | | | | | | | | | | | | | | |
| Sebacic acid | 101 | | | 50.5 | 190 | 150 | 100 | 50 | 20 | 133 | 180 | 90 | | | | | |
| Diacid 1550 | 190 | | | | | | | | | | | | | | | | 153 |
| Higher dibasic acid IPS-2 | 153 | | | | | | | | | | | | 290 | 145 | | | |
| Polymerized fatty acid (H250) | 290 | | | | | | | | | | | | | | | | |
| Propionic acid | 74 | | | | | | | | | 22.2 | | | | | | | |
| Benzoic acid | 122 | | | | | | | | | | | | | | 61 | | |
| 2-ethyl-hexanoic acid | 144 | | 61.5 | 61.5 | | | | | | | | | | 72 | 61.5 | 144 | |
| NHEP | 129 | 129 | 129 | 129 | 129 | 129 | 129 | 129 | 129 | 129 | 129 | 129 | 129 | 129 | 129 | 129 | 129 |
| Viscosity of product. | | 3308 | 610 | 630 | 5510 | 3140 | 890 | 180 | 50 | 2160 | 4920 | 470 | 8730 | 1510 | 450 | 133 | 1890 |

### Example 1

As noted in Table 2, Epikote 828 epoxy resin (16g), Epodil 757 epoxy resin (4g) and curing agent formulation Example A (2g) were weighed in a paper cup and thoroughly mixed. The initial viscosity of the mixture was tested and the viscosity after 16 hours was also tested. Further, a sample for DSC test was prepared from the sample immediately after the mixing above, and at the same time, a specimen for the shear bond test was produced. The result is shown in Table-2.

### Examples 2-18

The same tests as in Example 1 were performed on curing agents synthesized by changing the epoxide resin and raw material and the ratio therebetween. The results are shown in Tables 2 and 3.

**Table 2 : List of Examples**

| Example No. | | 1 | 2 | 3 | 4 | 5 | 6 | 7 | 8 | 9 |
|---|---|---|---|---|---|---|---|---|---|---|
| Formulation Example No. of curing agent | | A | B | C | D | E | F | G | H | I |
| Polyepoxide | Epoxy A | 80 | 100 | 100 | 90 | | | | | |
| | Epoxy B | | | | | | | | | |
| | Epoxy C | 20 | | | | | | | | |
| | Epoxy D | | | | 10 | | | | | |
| Amount of curing agent added, phr | | 10 | 10 | 10 | 15 | 10 | 10 | 7 | 5 | 12 |
| Change of viscosity mPas | Initial | 2500 | 8030 | 8040 | 1780 | 1880 | 1510 | 1260 | 1040 | 1880 |
| | After 16 hours | 3870 | 12580 | #### | 3300 | 3200 | 2500 | 2100 | 2160 | 2690 |
| | Rate of change | 1.5 | 1.6 | 1.6 | 1.9 | 1.7 | 1.7 | 1.7 | 2.1 | 1.4 |
| Tg, °C | Curing at 60°C | 76 | 76 | 79 | 76 | 75 | 73 | 71 | 70 | 73 |
| | Curing at 80°C | - | 89 | 89 | - | - | 66 | | | |
| Shear bond strength, N/mm² | | 13.4 | 15.5 | | 14.7 | | 13.3 | | | 13.4 |

**Table 3 : List of Examples**

| Example No. | | 10 | 11 | 12 | 13 | 14 | 15 | 16 | 17 | 18 | 19 | 20 |
|---|---|---|---|---|---|---|---|---|---|---|---|---|
| Formulation Example No. of curing agent | | D | | | I | J | K | L | M | N | O | P |
| Polyepoxide | Epoxy A | | | | 80 | | | 100 | 100 | 100 | 80 | 100 |
| | Epoxy B | 100 | 80 | 90 | | | | | | | | |
| | Epoxy C | | 20 | | 20 | | | | | | 20 | |
| | Epoxy D | | | 10 | | | | | | | | |
| Amount of curing agent added, phr | | 13 | 13 | 16 | 12 | 13 | 10 | 20 | 14 | 15 | 15 | 12 |
| Change of viscosity, of | Initial | 2560 | 830 | 810 | 2320 | 1530 | 1530 | ### | 7560 | 1280 | 1280 | 8190 |
| | After 16 hours | 4860 | 1580 | 1450 | 3504 | 2280 | 2280 | ### | ### | 1890 | 1890 | 15530 |
| | Rate of change | 1.9 | 1.9 | 1.8 | 1.5 | 1.5 | 1.5 | 1.3 | 1.5 | 1.3 | 1.5 | 1.9 |
| Tg, °C | Curing at 60°C | 80 | 73 | 70 | 73 | 72 | 75 | 77 | 78 | 79 | 72 | 81 |
| | Curing at 80°C | 87 | | 73 | | - | | 87 | | 84 | | |
| Shear bond strength, N/mm² | | 17.0 | 13.9 | 11.6 | 14.0 | | | 15.6 | | 15.9 | | |

In the following, Comparative Examples were performed on the epoxide-based compositions for rehabilitation of a buried pipe described in the prior art and the results clearly demonstrate the superiority of present invention.

### Comparative Example 1

Epikote 828 epoxy resin (16 g), Epodil 757 epoxy resin (4g) and Ancamide 2050 curing agent (3.8g) produced by Air Products and Chemicals, Inc. were weighed in a paper cup and thoroughly mixed using a mixer. This mixture was tested for the rate of change in the viscosity in the same manner as in Examples, as a result, the initial viscosity was 2,890 milli Pascal second, but solidification took place after 16 hours.

### Comparative Example 2

Similarly to Comparative Example 1, Epikote 828 epoxy resin (16 g), Epodil 757 epoxy resin (4g) and Ancamide 375A curing agent (2.15g) produced by Air Products and Chemicals, Inc. were weighed in a paper cup and thoroughly mixed using a mixer. This mixture was tested for the rate of change in the viscosity in the same manner as in Examples, as a result, the initial viscosity was 2,920 milli-Pascal second, but solidification took place after 16 hours.

### Comparative Example 3

A mixture of 16 g of Epikote 828 epoxy resin and 4 g of Epodil 757 epoxy resin and a curing agent (6g) synthesized from 38g of N-aminoethylpiperazine, 71g of dimethylaminopropylamine and 130 g of butylglycidyl ether were weighed in a paper cup and thoroughly mixed using a mixture. The viscosity of this mixture was measured and found to be 540 milli-Pascal second, but solidification took place after 16 hours.

### Comparative Example 4

A mixture of 16 g of Epikote 828 epoxy resin and 4 g of Epodil 757 epoxy resin and a curing agent (4 g) synthesized from 60g of a salt compound (Ancamine K16B) composed of tris(dimethylaminomethyl)phenol and 2-ethylhexanoic acid, 100g of bisphenol -A and 70 g of benzyl alcohol were weighed in a paper cup and thoroughly mixed using a mixer. The initial viscosity of this mixture was 1,970 milli-Pascal second, the viscosity after 16 hours was 6,460 milli-Pascal second, and the rate of change was 3.3 times.

### Comparative Example 5

A mixture of 16 g of Epikote 828 epoxy resin and 4 g of Epodil 757 epoxy resin and a curing agent (3.0g) synthesized from 85 g of piperidine, 272 g of benzyl alcohol, 60 g of Epikote 828 epoxy resin and 217 g of bisphenol-A were weighed in a paper cup and thoroughly mixed using a mixer. The initial viscosity of this mixture was 1,620 milli-Pascal second, the viscosity after 16 hours was 7,000 milli-Pascal second, and the rate of change was 4.3 times.

As clear from the results shown in Tables 2 and 3, the composition composed of an epoxide and a salt of an N-alkanol piperidine with a carboxylic acid kept the rate of change of viscosity about 2 times or less for up to 16 hours after the mixing of the epoxy component and the curing agent component, as compared with the initial viscosity, and also exhibited a long pot life such that the liquid condition was held even after the passing of 24 hours. Moreover, the composition cured at a temperature of 100°C or less, is sufficiently cured in that the resulting glass transition temperature is 70°C or more which is in the practical region. Further, the results of the shear bond test performed using a soft steel sheet on some compositions selected from the compositions above reveal sufficiently high bond strength.

On the other hand, commercially available curable epoxide-based compositions indicated in the prior art all showed a numerical value of 2 times or more for the rate of change in the viscosity after 16 hours, it being understood that the pot life of these compositions is not satisfied. Also, the glass transition temperature of the cured product was insufficient.

It is clear from these results that the epoxide-based compound of the present invention has novelty in terms of its performance. The composition of the present invention has differentially long pot life and enables achieving curing later in a low temperature region of 100°C or less and giving a cured product with the glass transition temperature being a practical temperature reaching 70°C or more.

Further, the composition of the present invention is a liquid and therefore, is applicable as a binder to a composite material using a woven fabric, a fiber or the like in combination.

The invention also relates to the following numbered items:
1. An epoxide-based composition, comprising
   (A) an epoxide component comprising at least one phenyl glycidyl ether polyepoxide having at least one epoxide group of oxirane structure in the molecule; and
   (B) a curing agent component comprising at least one salt compound formed from an N-alkanol piperidine and a carboxylic acid,
   the amount of the curing agent component (B) is from 1 to 50 wt parts per 100 wt parts of the epoxide component (A).
2. The epoxide-based composition according to item 1, wherein the epoxide component (A) further comprises a epoxide compound other than a phenyl glycidyl ether polyepoxide.
3. The epoxide-based composition according to item 2, wherein the other epoxide compound is at least one compound selected from the group consisting of glycidyl ethers, glycidyl esters and glycidyl amines.
4. The epoxide-based composition according to item 1, wherein the N-alkanol piperidine is selected from the group consisting of N-piperidine ethanol and N-piperidine propanol.
5. The epoxide-based composition according to item 2, wherein the N-alkanol piperidine is selected from the group consisting of N-piperidine ethanol and N-piperidine propanol.
6. The epoxide-based composition according to item 3, wherein the N-alkanol piperidine is selected from the group consisting of N-piperidine ethanol and N-piperidine propanol.
7. The epoxide-based composition according to item 4, wherein the N-piperidine alkanol constituting the curing agent component is N-piperidine ethanol.
8. The epoxide-based composition according to item 5, wherein the N-piperidine alkanol is N-piperidine ethanol.
9. The epoxide-based composition according to item 6, wherein the N-piperidine alkanol is N-piperidine ethanol.
10. An epoxide-based composition, comprising
   (A) an epoxide component comprising at least one phenyl glycidyl ether polyepoxide having at least one epoxide group of oxirane structure in the molecule; and
   (B) a curing agent component comprising at least one salt compound formed from an N-alkanol piperidine and a carboxylic acid,
   the amount of the curing agent component (B) is from 5 to 20 wt parts per 100 wt parts of the epoxide component (A)

## Claims

1. An epoxide-based composition, comprising
(A) an epoxide component comprising at least one phenyl glycidyl ether polyepoxide having at least one epoxide group of oxirane structure in the molecule; and
(B) a curing agent component comprising at least one salt compound formed from an N-alkanol piperidine and a carboxylic acid,
the amount of the curing agent component (B) is from 1 to 50 wt parts per 100 wt parts of the epoxide component (A).

2. The epoxide-based composition according to claim 1, wherein the epoxide component (A) further comprises a epoxide compound other than a phenyl glycidyl ether polyepoxide.

3. The epoxide-based composition according to claim 2, wherein the other epoxide compound is at least one compound selected from the group consisting of glycidyl ethers, glycidyl esters and glycidyl amines.

4. The epoxide-based composition according to claims 1 to 3, wherein the N-alkanol piperidine is selected from the group consisting of N-piperidine ethanol and N-piperidine propanol.

5. The epoxide-based composition according to claims 1 to 4, wherein the N-piperidine alkanol constituting the curing agent component is N-piperidine ethanol.

6. The epoxide-based composition according to claims 1 to 5, comprising
(A) an epoxide component comprising at least one phenyl glycidyl ether polyepoxide having at least one epoxide group of oxirane structure in the molecule; and
(B) a curing agent component comprising at least one salt compound formed from an N-alkanol piperidine and a carboxylic acid,
the amount of the curing agent component (B) is from 5 to 20 wt parts per 100 wt parts of the epoxide component (A)
